# EUROPÄISCHE PATENTANMELDUNG

(11) **EP 4 778 858 A1**
(43) Veröffentlichungstag der Anmeldung: **22.07.2026**
(21) Anmeldenummer: 26151749.4
(22) Anmeldetag: 14.01.2026
(51) Int. Cl.: B65G 17/00, B65G 43/08, B65G 45/02, B65G 47/68, B65G 47/71, B65G 47/64

(54) **VERTEIL- UND/ODER ZUSAMMENFÜHRUNGSFÖRDERER, BEHÄLTERBEHANDLUNGSANLAGE MIT EINEM ENTSPRECHENDEN VERTEIL- UND/ODER ZUSAMMENFÜHRUNGSFÖRDERER UND VERFAHREN ZUM SCHMIEREN EINES VERTEIL- UND/ODER ZUSAMMENFÜHRUNGSFÖRDERERS**

(30) Priorität: 20.01.2025 DE 102025101749
(71) Anmelder: KHS GmbH, 44143 Dortmund (DE)
(72) Erfinder: Nitsch, Thomas, 44143 Dortmund (DE); Pau, Norman, 44143 Dortmund (DE)

(57) **Zusammenfassung**

Die Erfindung betrifft einen Verteil- und/oder Zusammenführungsförderer (100) zum Verteilen und Zusammenführen von Waren, insbesondere von in Gebinden gruppierten Behältern, wobei der Verteil- und/oder Zusammenführungsförderer (100) Folgendes aufweist: eine Vielzahl umlaufend angetriebener Warenträger (110), die entlang zumindest zweier Führungsbahnen (120a, 120b, 120c) in Förderrichtung (F) bewegbar sind; eine Umlenkeinrichtung (120) zum Aufteilen der Warenträger (110) auf die Führungsbahnen (120a, 120b, 120c); eine Vielzahl von den Warenträgern (110) zugeordneten Gleitkörpern (150), entlang derer die Warenträger (110) in einer Verschieberichtung (V) senkrecht zur Förderrichtung (F) verschiebbar sind, wobei die Warenträger (110) zumindest teilweise mittels eines Führungselements (111) entlang der Führungsbahnen (120a, 120b, 120c) geführt sind, wobei die Führungselemente (111) dazu ausgebildet sind, die Warenträger (110) durch Kontakt mit einem Führungskörper (121a, 121b, 121c) der Führungsbahn (120a, 120b, 120c) abhängig von einer Ausrichtung des Führungskörpers (121a, 121b, 121c) zu verschieben, wobei der Verteil- und/oder Zusammenführungsförderer (100) an zumindest einer der Führungsbahnen (120a, 120b, 120c) eine Betriebszustandserfassungseinrichtung (130) aufweist, die dazu ausgebildet ist, einen sich abhängig von einer Widerstandskraft ändernden Messwert zu erfassen, wobei die Widerstandskraft beim Verschieben der Warenträger (110) entlang der jeweiligen Gleitkörper (150) gegen die Verschiebebewegung der Warenträger (110) wirkt.

## Beschreibung

### Technisches Gebiet

Die Erfindung betrifft einen Verteil- und/oder Zusammenführungsförderer zum Verteilen und/oder Zusammenführen von Waren, insbesondere von in Gebinden gruppierten Behältern, mit einer Vielzahl umlaufend angetriebener Warenträger, die entlang zumindest zweier Führungsbahnen in Förderrichtung bewegbar sind.

Ferner betrifft die Erfindung eine Behälterbehandlungsanlage mit zumindest einer Behälterbehandlungsmaschine und einem entsprechenden Verteil- und/oder Zusammenführungsförderer.

Weiterhin betrifft die Erfindung ein Verfahren zum Schmieren eines Verteil- und/oder Zusammenführungsförderers.

### Stand der Technik

Verteil- und/oder Zusammenführungsförderer der eingangs beschriebenen Art sind grundsätzlich aus dem Stand der Technik bekannt und dienen beispielsweise als Verteilförderer dazu, einen zulaufenden Eingangsstrom aus hintereinander angeordneten Gebinden auf mehrere nebeneinander angeordnete Ausgangsströme zu verteilen. Alternativ hierzu dienen diese als Zusammenführungsförderer zum Zusammenführen mehrerer Eingangsströme zu einer geringeren Anzahl von Ausgangsströmen. Im Folgenden wird die Funktionsweise der Erfindung primär anhand der ersten Funktion, also dem Verteilen, beschrieben. Die Erfindung ist jedoch in keiner Weise hierauf beschränkt und lässt sich in gleicher Weise auch beim Zusammenführen anwenden.

Hierbei bezieht sich die Erfindung insbesondere auf Gebinde aus der Getränkeindustrie, wobei dann die Gebinde eine Mehrzahl von Getränkebehältern umfassen. Bei den Getränkebehältern handelt es sich insbesondere um Dosen, Flaschen oder Getränkekartons. Nach dem Befüllen der Getränkebehälter werden diese in einer Gebindebildungsvorrichtung zu Gebinden zusammengefasst und die einzelnen Behälter innerhalb eines Gebindes miteinander fixiert.

Dann werden die Gebinde üblicherweise einem entsprechenden Verteilförderer zugeführt, um die Gebinde zum Zwecke einer nachgeordneten Verarbeitung, beispielsweise der Anbringung eines Tragegriffs, auf mehrere Teilströme zu verteilen.

Beispielsweise ist aus der DE 10 2022 100 904 A1 ein Verteilförderer zum Verteilen von Gebinden mit einer Vielzahl umlaufend angetriebener Warenträger bekannt, die in einem Verteilabschnitt des Verteilförderers entlang zumindest zwei Führungsbahnen in Förderrichtung bewegbar sind. Dabei sind die Warenträger zumindest teilweise mit einem Führungsbolzen entlang einer der Führungsbahnen geführt, wobei zur Aufteilung der Warenträger auf die Führungsbahn zumindest eine Umlenkeinrichtung vorgesehen ist.

### Darstellung der Erfindung

Der Erfindung liegt die Aufgabe zugrunde, die aus dem Stand der Technik bekannten Verteil- und/oder Zusammenführungsförderer zu verbessern und einen Verteil- und/oder Zusammenführungsförderer anzugeben, der Vorteile gegenüber dem eingangs genannten Stand der Technik bieten. Weiterhin ist es Aufgabe der vorliegenden Erfindung, eine vorteilhafte Behälterbehandlungsanlage mit einem entsprechenden Verteil- und/oder Zusammenführungsförderer anzugeben. Ferner ist es Aufgabe der vorliegenden Erfindung, ein vorteilhaftes Verfahren zum Schmieren eines Verteil- und/oder Zusammenführungsförderers anzugeben.

Diese Aufgaben werden durch die Gegenstände der unabhängigen Ansprüche gelöst. Weitere mögliche Ausgestaltungen der Erfindung sind insbesondere in den abhängigen Ansprüchen angegeben.

Die erfindungsgemäße Lösung besteht insbesondere darin, einen Verteil- und/oder Zusammenführungsförderer zum Verteilen und/oder Zusammenführen von Waren, insbesondere von in Gebinden gruppierten Behältern anzugeben. Der Verteil- und/oder Zusammenführungsförderer weist eine Vielzahl umlaufend angetriebener Warenträger auf, die entlang zumindest zweier Führungsbahnen in Förderrichtung bewegbar sind. Weiterhin weist der Verteil- und/oder Zusammenführungsförderer eine Umlenkeinrichtung zum Aufteilen und/oder Zusammenführen der Warenträger auf die Führungsbahnen auf. Ferner weist der Verteil- und/oder Zusammenführungsförderer eine Vielzahl von Gleitkörpern auf, entlang derer die Warenträger in einer Verschieberichtung verschiebbar sind. Die Verschieberichtung ist senkrecht zur Förderrichtung ausgerichtet. Die Warenträger weisen Führungselemente auf, die zum zumindest bereichsweisen Führen der Warenträger entlang der Führungsbahnen ausgebildet sind. Insbesondere sind die Führungselemente dazu ausgebildet, die Warenträger durch Kontakt mit einem Führungskörper der Führungsbahn abhängig von einer Ausrichtung, insbesondere der Neigung, des Führungskörpers entlang der zugehörigen Gleitkörper in Verschieberichtung zu verschieben.

Erfindungsgemäß weist der Verteil- und/oder Zusammenführungsförderer an zumindest einer der Führungsbahnen eine Betriebszustandserfassungseinrichtung auf. Die Betriebszustandserfassungseinrichtung ist dazu ausgebildet, einen sich abhängig von einer Widerstandskraft, insbesondere einem Reibungswiderstand, ändernden Messwert zu erfassen. Dabei ist die Widerstandskraft die Kraft, die beim Verschieben der Warenträger entlang der jeweiligen Gleitkörper gegen die Verschiebebewegung der Warenträger wirkt.

Bei einem Verteil- und/oder Zusammenführungsförderer handelt es sich allgemein um eine Fördervorrichtung, die dazu ausgebildet ist, Waren, und zwar insbesondere in Gebinden gruppierte Behälter, aufzuteilen und/oder zusammenzuführen. Dabei teilt der Verteil- und/oder Zusammenführungsförderer einen Wareneingangsstrom, insbesondere Gebindeeingangsstrom, in mehrere Warenteilströme, insbesondere Gebindeteilströme, auf. Dabei dient der Verteil- und/oder Zusammenführungsförderer dazu, die Waren, insbesondere Gebinde, auf mehrere Förderbahnen aufzuteilen. In der umgekehrten Funktion führt der Verteil- und/oder Zusammenführungsförderer mehrere Wareneingangsströme, insbesondere Gebindeeingangsströme, zu weniger bzw. einem Warenausgangsstrom zusammen.

Der Begriff Behälter bezeichnet im Sinne der vorliegenden Erfindung einstückige oder aus mehreren fest miteinander verbundenen Teilen gebildete Körper. Bevorzugt weist jeder Behälter im Inneren einen Hohlraum auf und ist dazu ausgebildet, diesen Hohlraum von der Umgebung abzutrennen. Bei den Behältern kann es sich beispielsweise um Behälter zur Aufbewahrung von Lebensmitteln und oder von flüssigen, viskosen oder pastösen Substanzen handeln. Besonders bevorzugt handelt es sich bei den Behältern um Getränkebehälter. Insbesondere handelt es sich bei den Getränkebehältern um Flaschen, Dosen oder Getränkekartons. Die einzelnen Behälter sind vorzugsweise zu einem Gebinde, also einer vorgebbaren, insbesondere miteinander verbundenen Gruppierung von Behältern zusammengefasst. Lediglich beispielhaft kann das Gebinde als Viererpack, Sechserpack oder Achterpack ausgebildet sein und entsprechend vier, sechs oder acht Behälter umfassen.

Bei den Warenträgern handelt es sich um Einrichtungen, die dazu ausgebildet sind, die Waren, insbesondere Gebinde von Behältern, zu tragen. Insbesondere werden die Waren stehend getragen, so dass die Waren auf die Warenträger stellbar sind. Die Waren werden also durch Bewegung der Warenträger selbst in Förderrichtung bewegt. Die Warenträger sind umlaufend angetrieben, bewegen sich also umlaufend und sind insbesondere durch eine kontinuierliche, geschlossene Antriebseinheit, beispielsweise Kette, bewegbar.

Die Warenträger sind hierbei insbesondere entlang einer endlosen Schleife angetrieben und kehren nach einem Umlauf wieder an ihren Ausgangspunkt zurück, um weitere Waren aufzunehmen und zu transportieren.

Bei den Führungsbahnen handelt es sich um Bahnen, die die Bewegungsrichtung der Warenträger vorgeben, wobei zumindest zwei, vorzugsweise zumindest drei, insbesondere unterschiedliche, solcher Führungsbahnen vorgesehen sind. Die Führungsbahnen sind hierbei dazu ausgebildet, die Waren von einem Wareneingangsstrom insbesondere in parallel zueinander verlaufende Warenteilströme aufzuteilen. Dabei verlaufen vorzugsweise alle Warenteilströme in Förderrichtung.

Bei der Umlenkeinrichtung handelt es sich allgemein um eine Einrichtung, die dazu ausgebildet ist, die Warenträger derart zu steuern bzw. zu beeinflussen, dass die Warenträger auf verschiedene Führungsbahnen verteilt oder zusammengeführt werden. Die Umlenkeinrichtung kann insbesondere als stellbare Umlenkweiche ausgebildet sein. Dann kann der Warenträger Umlenkelemente aufweisen, die dazu ausgebildet sind, mit der Umlenkeinrichtung in Eingriff zu kommen und den Warenträger so auf die einzelnen Führungsbahnen zu verteilen. Eine beispielhafte Ausführung der Umlenkeinrichtung ist in der DE 10 2022 100 904 A1 angegeben.

Bei den Gleitkörpern handelt es sich ganz allgemein um Körper, an denen die Warenträger verschiebbar angeordnet sind. Hierbei kann beispielsweise jedem Warenträger ein Gleitkörper zugeordnet sein. Alternativ hierzu kann einer Gruppierung, beispielsweise zwei Warenträgern, ein gemeinsamer Gleitkörper zugeordnet sein.

Beispielsweise erstrecken sich die Gleitkörper senkrecht zur Förderrichtung, also in Verschieberichtung und werden umlaufend angetrieben. Dabei sind die Gleitkörper vorzugsweise dazu ausgebildet, die Warenträger in ihrer Bewegung mitzunehmen. Die Warenträger sind also in Förderrichtung unbeweglich mit den Gleitkörpern verbunden und in Verschieberichtung beweglich, insbesondere verschiebbar, mit den Gleitkörpern verbunden.

Bei den Führungselementen handelt es sich allgemein um Elemente des Warenträgers, die durch Interaktion, insbesondere Kontaktieren des Führungskörpers, die Verschiebung des Warenträgers entlang der Führungsbahn und somit auch die Verschiebung entlang des Gleitkörpers leiten. Bei dem Führungselement kann es sich allgemein um ein vorstehendes Führungselement, beispielsweise einen Führungsbolzen handeln, der vorzugsweise in einer Richtung senkrecht zur Verschieberichtung und senkrecht zur Förderrichtung, insbesondere nach unten hin, von dem Warenträger vorsteht. Das vorstehende Führungselement kann dann mit den unterhalb der Warenträger angeordneten Führungskörpern in Kontakt kommen.

Bei dem Führungskörper handelt es sich ganz allgemein um einen strukturellen Teil der Führungsbahn, der die Bewegung des Warenträgers durch Kontakt mit dem Führungselement vorgibt. Hierzu ist der Führungskörper relativ zur Förderrichtung geneigt respektive neigbar, sodass eine Bewegung des Warenträgers schräg zur Förderrichtung verläuft. Durch diese schräge Bewegung können die Warenträger in mehrere parallel zueinander angeordnete Reihen aufgeteilt und ausgerichtet werden.

Da erfindungsgemäß vorgesehen ist, dass an der Führungsbahn eine Betriebszustandserfassungseinrichtung angeordnet ist, kann der Betriebszustand des Verteil- und/oder Zusammenführungsförderers überwacht werden. Dabei misst die Betriebszustandserfassungseinrichtung insbesondere die Widerstandskraft, die beim Verschieben der Warenträger auftritt. Bei der Widerstandskraft handelt es sich um die Kraft, die entgegen der Bewegung der Warenträger entlang der Gleitkörper wirkt.

Sind die Warenträger nicht blockiert, handelt es sich also um den Reibungswiderstand, also die mechanische Reibung, zwischen Warenträger und Gleitkörper. Sind die Warenträger durch ein Hindernis blockiert, handelt es sich um die durch das Hindernis wirkende Kraft.

Mittels der Betriebszustandserfassungseinrichtung lässt sich somit eine Aussage treffen, ob die Warenträger sich ausreichend gut, also mit geringem Widerstand, entlang der Gleitkörper bewegen können oder nicht. Wenn die Widerstandskraft zu groß ist, kann die Reibung zwischen Warenträger und Gleitkörper durch Vorsehen eines Schmiermittels entsprechend verringert werden. Die Schmierung kann hierbei nur dann aktiviert werden, wenn diese tatsächlich nötig ist und ein überflüssiges Aktivieren von Schmierstoff kann verhindert werden. Somit erfolgt eine bedarfsgesteuerte Abgabe von Schmierstoff.

Auch können durch die Erfassung der Widerstandskraft Verschleiß und Verschmutzungen oder Hindernisse schnell und zuverlässig festgestellt werden.

Gemäß einer vorteilhaften Weiterbildung der Erfindung weist die Betriebszustandserfassungseinrichtung einen Kraftsensor, insbesondere einen Dehnmessstreifen, auf.

Die Betriebszustandserfassungseinrichtung ist also mit einem Kraftsensor zum Erfassen des Messwerts ausgestattet. Mittels des Kraftsensors ist es möglich, eine von der Widerstandskraft abhängige Kraft zu erfassen. Durch einen Dehnmessstreifen ist insbesondere eine äußerst messempfindliche und genaue Erfassung einer von der Widerstandskraft abhängigen Dehnung möglich.

Bei einer vorteilhaften Weiterbildung der Erfindung ist die Betriebszustandserfassungseinrichtung dazu ausgebildet, eine auf zumindest einen der Führungskörper wirkende Kraft, insbesondere in Richtung der Haupterstreckungsrichtung des jeweiligen Führungskörpers, zu erfassen.

Dabei wird insbesondere eine Kraft erfasst, die durch den Kontakt mit den Warenträgern auf den jeweiligen Führungskörper wirkt. Im laufenden Betrieb wird der Warenträger in Förderrichtung F und beim Verteilen mit einer Kraft in Verschieberichtung V gegen den entsprechenden Führungskörper gedrückt. Die hierdurch am Führungskörper entstehende resultierende Kraft ist mit der Betriebszustandserfassungseinrichtung messbar. Insbesondere ist die Betriebszustandserfassungseinrichtung hierbei als Kraftsensor besonders bevorzugt als Dehnmessstreifen ausgebildet.

Bevorzugt wird also mit einem Dehnmessstreifen eine auf den Führungskörper wirkende Kraft gemessen. Dabei wird der Dehnmessstreifen vorzugsweise entlang der Haupterstreckungsrichtung des jeweiligen Führungskörpers ausgerichtet. Durch die Korrelation der Dehnung des Führungskörpers und die durch den oder die Warenträger auf den Führungskörper wirkende Kraft ist es möglich Rückschlüsse auf die entgegen der Verschiebebewegung wirkende Widerstandskraft bzw. den Reibungswiderstand zwischen Warenträger und Gleitkörper zu ziehen. Statt somit an den schwer zugänglichen und sich bewegenden Warenträgern oder Gleitkörpern eine Kraftmessung vorzunehmen, wird an den besser zugänglichen Führungskörpern gemessen.

Gemäß einer vorteilhaften Weiterbildung der Erfindung sind die Führungskörper zumindest im Wesentlichen stabförmig ausgebildet.

Die Führungskörper weisen also eine längliche Form mit einer in Haupterstreckungsrichtung verlaufenden klar definierten Hauptachse auf. Die Haupterstreckungsrichtung ist hierbei die Richtung, in die sich der Führungskörper hauptsächlich erstreckt, also die längste Dimension des insbesondere stabförmigen Körpers. Die Haupterstreckungsrichtung gibt somit auch die Orientierung vor, entlang derer der Warenträger bewegt wird.

Durch die stabförmige Gestaltung können die Warenträger zielgerichtet entlang der Haupterstreckungsrichtung der Führungskörper geführt werden, was zu einer stabilen Bewegung führt.

Gemäß einer vorteilhaften Weiterbildung der Erfindung ist die Betriebszustandserfassungseinrichtung an dem Führungskörper der jeweiligen Führungsbahn angeordnet, insbesondere befestigt.

Mit anderen Worten ist die Betriebszustandserfassungseinrichtung, insbesondere der Kraftsensor oder Dehnmessstreifen, direkt am Führungskörper angeordnet. Durch diese Positionierung kann die Betriebszustandserfassungseinrichtung unmittelbar die auf den Führungskörper wirkenden Kräfte und Belastungen messen und abhängig hiervon die Betriebsbedingungen des Verteil- und/oder Zusammenführungsförderers überwachen. Es hat sich gezeigt, dass hierdurch eine besonders präzise Erfassung der Kräfte möglich ist.

Bei einer bevorzugten Weiterbildung der Erfindung ist der Führungskörper zumindest bereichsweise, vorzugsweise vollständig, aus einem elastisch dehnbaren Material, insbesondere aus Kunststoff, ausgebildet.

Mit anderen Worten besteht der Führungskörper zumindest in Bereichen, insbesondere den Bereichen, in denen die Betriebszustandserfassungseinrichtung angeordnet ist, aus einem elastisch dehnbaren Material. Als ein elastisch dehnbares Material wird ein Material verstanden, dass die Eigenschaft hat, sich bei Krafteinwirkung zu verformen und anschließend wieder in seine ursprüngliche Form zurückzukehren, sobald die Belastung nachlässt. Bei der Verwendung eines elastisch dehnbaren Materials kann somit die Verformung des Materials zuverlässig mittels eines Dehnmessstreifens gemessen werden. Besonders bevorzugt handelt es sich bei dem elastisch dehnbaren Material um Kunststoff.

Gemäß einer vorteilhaften Weiterbildung der Erfindung weist der Führungskörper einen verjüngten Bereich mit einer reduzierten Materialstärke auf. Vorzugsweise ist die Betriebszustandserfassungseinrichtung zum Messen an dem verjüngten Bereich angeordnet.

Mit anderen Worten ist der Führungskörper derart gestaltet, dass dieser einen verjüngten Bereich aufweist, der durch eine reduzierte Materialstärke gekennzeichnet ist. Dieser verjüngte Bereich dient als gezielt geschwächte Stelle, an der sich Verformungen und Krafteinwirkungen stärker konzentrieren.

Wird die Betriebszustandserfassungseinrichtung vorzugsweise an diesem verjüngten Bereich positioniert, lassen sich selbst kleinste Kraft- und Dehnungsveränderungen genau messen. Die geringe Materialstärke im verjüngten Bereich verstärkt also die Materialverformung bei Belastung, was die Empfindlichkeit der Messung erhöht.

Bei einer vorteilhaften Weiterbildung dieser Ausführungsform weist der verjüngte Bereich eine Materialstärke zwischen 3 mm und 15 mm, vorzugsweise zwischen 5 mm und 10 mm, auf.

Es hat sich herausgestellt, dass dieser Bereich besonders vorteilhaft ist und einen guten Kompromiss zwischen der Empfindlichkeit der Messung und der Stabilität des Führungskörpers ermöglicht.

Vorzugsweise ist die Betriebszustandserfassungseinrichtung als Dehnmessstreifen direkt auf dem verjüngten Bereich befestigt.

Bei einer vorteilhaften Weiterbildung der Erfindung weist der Verteil- und/oder Zusammenführungsförderer eine Schmierungseinrichtung, insbesondere zum Schmieren der Gleitkörper, auf. Die Schmierungseinrichtung ist vorzugsweise in Abhängigkeit von dem mittels der Betriebszustandserfassungseinrichtung erfassten Messwert steuerbar.

Mit anderen Worten wird die Schmierungseinrichtung automatisch und bedarfsgerecht gesteuert, basierend auf den Messwerten, die durch die Betriebszustandserfassungseinrichtung erfasst werden. Mithilfe der Betriebszustandserfassungseinrichtung ist es somit möglich, kontinuierlich den Reibungswiderstand zu überwachen. Sobald die von der Betriebszustandserfassungseinrichtung erfassten Werte auf eine erhöhte Reibung oder Belastung hinweisen, wird mittels der Schmierungseinrichtung die Schmierung aktiviert. Besonders bevorzugt erfolgt die Schmierung an den Gleitkörpern. Es ist denkbar, dass Bereiche der Gleitkörper einzeln und unabhängig voneinander schmierbar sind.

Zur Ansteuerung der Schmierungseinrichtung kann eine Steuereinrichtung ausgebildet sein. Die Steuereinrichtung ist dann mit der Schmierungseinrichtung und mit der Betriebszustandserfassungseinrichtung signaltechnisch verbunden. Beispielsweise ist die Betriebszustandserfassungseinrichtung dazu ausgebildet, erfasste Messwerte an die Steuereinrichtung zu senden. Die Steuereinrichtung ist dann dazu ausgebildet, basierend auf den empfangenen Messwerten ein Steuersignal zum Steuern der Schmierungseinrichtung auszugeben. Berechnungen oder Wertetabellen zur Verarbeitung der erfassten Messwerte können beispielsweise auf einer Speichereinheit der Steuereinrichtung gespeichert sein.

Durch die bedarfsgerechte Schmierung erfolgt die Schmierung also nur, wenn die Betriebszustandserfassungseinrichtung erhöhte Reibung oder Belastung feststellt. Dadurch wird unnötige Schmierung vermieden, was den Schmierstoffverbrauch reduziert und die Umwelt schont. Durch die gezielte Schmierung bei Bedarf wird der Verschleiß an den Gleitkörpern und den Warenträgern verringert, was deren Lebensdauer verlängert und die Wartungskosten senkt.

Durch die automatische Steuerung der Schmierung können manuelle Schmierungsvorgänge eingespart werden. Zudem ist es möglich mittels der gemessenen Werte einen tatsächlichen Wartungsbedarf zu bestimmen.

Bei einer vorteilhaften Weiterbildung dieser Ausführungsform weist die Schmierungseinrichtung Schmierpinsel zum Auftragen eines Schmiermittels auf die Gleitkörper auf.

Die Schmierungseinrichtung ist also mit Schmierpinseln ausgestattet, die das Schmiermittel gezielt auf die Gleitkörper auftragen. Bei einem Schmierpinsel handelt es sich um ein flexibles Werkzeug, durch das das Schmiermittel gleichmäßig verteilt in einer dünnen Schicht direkt auf die zu schmierende Oberfläche auftragbar ist. Die Pinselnatur sorgt dafür, dass das Schmiermittel optimal dosiert ist, ohne dass ein Überschuss aufgebracht wird. Durch die Verwendung von Schmierpinseln kann somit ein reduzierter Schmiermittelverbrauch und eine gleichmäßige Auftragsmenge sichergestellt werden. Bei dem Schmiermittel kann es sich besonders bevorzugt um Öl handeln.

Vorzugsweise sind mehrere Schmierungseinrichtungen bzw. Schmierpinsel an dem Verteil- und/oder Zusammenführungsförderer angeordnet. Beispielsweise sind vor und/oder hinter der Umlenkeinrichtung entsprechende Schmierungseinrichtungen bzw. Schmierpinsel angeordnet.

Gemäß einer vorteilhaften Weiterbildung der Erfindung sind die Gleitkörper stabförmig, insbesondere rundstabförmig, ausgebildet.

Durch diese Formgebung ist eine gleichmäßige Kontaktfläche zur Führung und Erleichterung des Gleitens der Warenträger entlang der Gleitkörper möglich.

Durch die Rundstabform verteilen sich aufgebrachte Kräfte gleichmäßig über den gesamten Umfang. Hierdurch können punktuelle Belastungen reduziert werden und einem frühzeitigen Verschleiß vorgebeugt werden, was die Lebensdauer der Gleitkörper verlängert.

Durch den rundstabförmigen Querschnitt ist es zudem möglich, dass die Warenträger bereichsweise drehbar auf den Gleitkörpern angeordnet sind. Hierdurch wird die umlaufende Bewegung der Warenträger widerstandsärmer gestaltet.

Gemäß einer vorteilhaften Weiterbildung der Erfindung sind die Gleitkörper aus Metall ausgebildet. Alternativ oder zusätzlich sind die Warenträger zumindest bereichsweise, insbesondere im Kontaktbereich mit den Gleitkörpern, aus Kunststoff ausgebildet.

Wenn die Gleitkörper aus Metall ausgebildet sind, sind diese besonders langlebig und haben eine hohe Verschleißresistenz. Die Gleitkörper sind verglichen mit den Warenträgern bei einer Wartung schwer auszutauschen. Somit ist ein gesteuerter Verschleiß an den Warenträgern wartungstechnisch vorteilhaft. Besonders bevorzugt sind die Gleitkörper mit einer polierten Oberfläche ausgebildet.

Bei der Materialkombination Metall und Kunststoff ist insgesamt eine effiziente und verschleißarme Gleitbewegung möglich.

Die erfindungsgemäße Lösung besteht weiter darin, eine Behälterbehandlungsanlage anzugeben. Die Behälterbehandlungsanlage weist zumindest eine Behälterbehandlungsmaschine, insbesondere eine Gebindebildevorrichtung zum Gruppieren von Behältern zu Gebinden auf. Weiterhin weist die Behälterbehandlungsmaschine einen der vorab beschriebenen Verteil- und/oder Zusammenführungsförderer auf.

Der Verteil- und/oder Zusammenführungsförderer kann insbesondere dazu ausgebildet sein, die in Gebinden gruppierten Behälter zu verteilen. Entsprechend ist der Verteil- und/oder Zusammenführungsförderer hinter der Gebindebildevorrichtung angeordnet.

Bei der Behälterbehandlungsanlage handelt es sich allgemein um eine Anlage zum Behandeln von Behältern. Die Behälterbehandlungsanlage kann eine Vielzahl von Behälterbehandlungsmaschinen aufweisen. Beispielsweise kann die Behälterbehandlungsanlage zusätzlich zu der Gebindebildevorrichtung eine Behälterherstellungsmaschine, eine Behälterbefüllungsmaschine, eine Behälterschließmaschine, eine Behälteretikettiermaschine und/oder eine Behälterverpackungsmaschine aufweisen.

Da die Behälterbehandlungsanlage mindestens einen der vorab beschriebenen Verteil- und/oder Zusammenführungsförderer aufweist, können sämtliche einzelne Aspekte und Vorteile der Verteil- und/oder Zusammenführungsförderer auf die Behälterbehandlungsanlage übertragen werden.

Die erfindungsgemäße Lösung besteht weiter darin, ein Verfahren zum Schmieren eines Verteil- und/oder Zusammenführungsförderers, insbesondere eines der vorgenannten Verteil- und/oder Zusammenführungsförderer, anzugeben. Dabei weist das Verfahren folgende Schritte auf. Anordnen von Waren, insbesondere in Gebinde gruppierte Behälter, auf einer Vielzahl von Warenträgern; Aufteilen der Waren entlang mehrerer Führungsbahnen durch Verschieben der Warenträger; Erfassen eines Messwerts, der von einer Widerstandskraft, insbesondere einem Reibungswiderstand, abhängt, der beim Verschieben der Warenträger gegen die Verschiebebewegung der Warenträger wirkt; und Schmieren des Verteil- und/oder Zusammenführungsförderers abhängig von dem erfassten Messwert.

Das Verfahren beschreibt also eine automatisierte Schmierung eines Verteil- und/oder Zusammenführungsförderers, und zwar basierend auf den tatsächlichen Betriebsbedingungen im Verteil- und/oder Zusammenführungsförderer. Ziel ist es auch hier, den Reibungswiderstand respektive die Belastung beim Verschieben der Warenträger zu überwachen und nur dann zu schmieren, wenn es die Umstände erfordern.

Beim Anordnen der Waren werden allgemein Gebinde auf den Warenträgern platziert. Die Warenträger dienen dann zur Verteilung der Gebinde entlang verschiedener Förderbahnen. Die Warenträger sind dazu ausgebildet, die Gebinde sicher und stabil zu lagern und zu transportieren. Bei den Warenträgern kann es sich um die oben beschriebenen Warenträger handeln.

Während die Warenträger verschoben werden, wird ein Messwert erfasst, der von der beim Verschieben auftretenden Widerstandskraft abhängt. Beispielsweise wird der Messwert durch die vorab beschriebene Betriebszustandserfassungseinrichtung erfasst.

Abhängig von dem erfassten Messwert wird das Schmieren des Verteil- und/oder Zusammenführungsförderers eingeleitet. Beispielsweise erfolgt das Schmieren mittels der vorab beschriebenen Schmierungseinrichtung.

### Kurze Beschreibung der Zeichnungen

Die oben beschriebenen, unterschiedlichen und beispielhaften Merkmale können erfindungsgemäß miteinander kombiniert werden, soweit dies technisch sinnvoll ist. Weitere Merkmale, Vorteile und Ausführungsformen der Erfindung ergeben sich aus der nachfolgenden Beschreibung von Ausführungsbeispielen und anhand der Figuren.

Die zur Erläuterung der Ausführungsbeispiele verwendeten Figuren zeigen:
- Fig. 1: eine perspektivische Darstellung eines erfindungsgemäßen Verteil- und/oder Zusammenführungsförderers;
- Fig. 2: eine Draufsicht auf den in Fig. 1 gezeigten Verteil- und/oder Zusammenführungsförderer; und
- Fig. 3: eine Vergrößerung des in Fig. 2 mit A gekennzeichneten Detailbereich des Verteil- und/oder Zusammenführungsförderers.

### Wege zur Ausführung der Erfindung

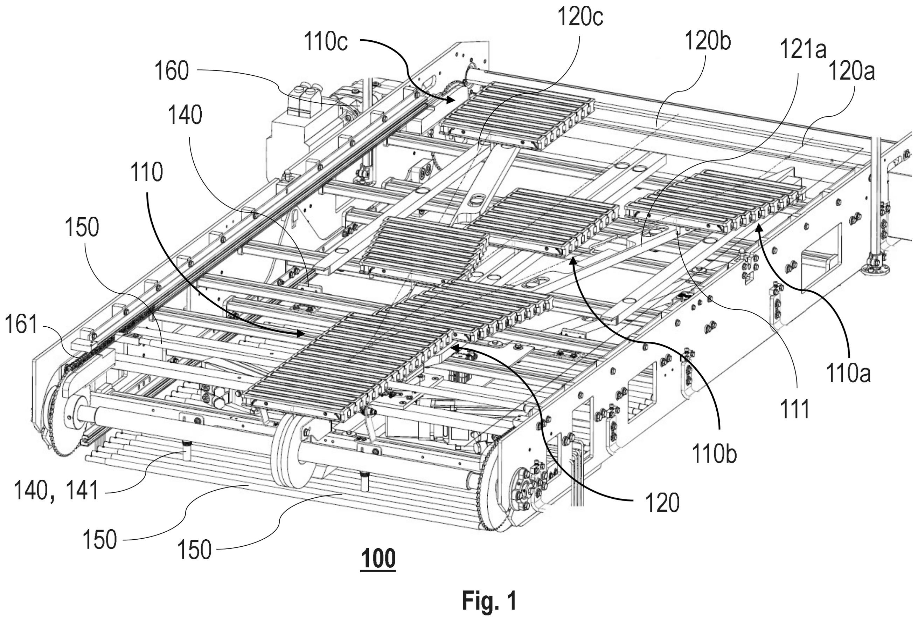

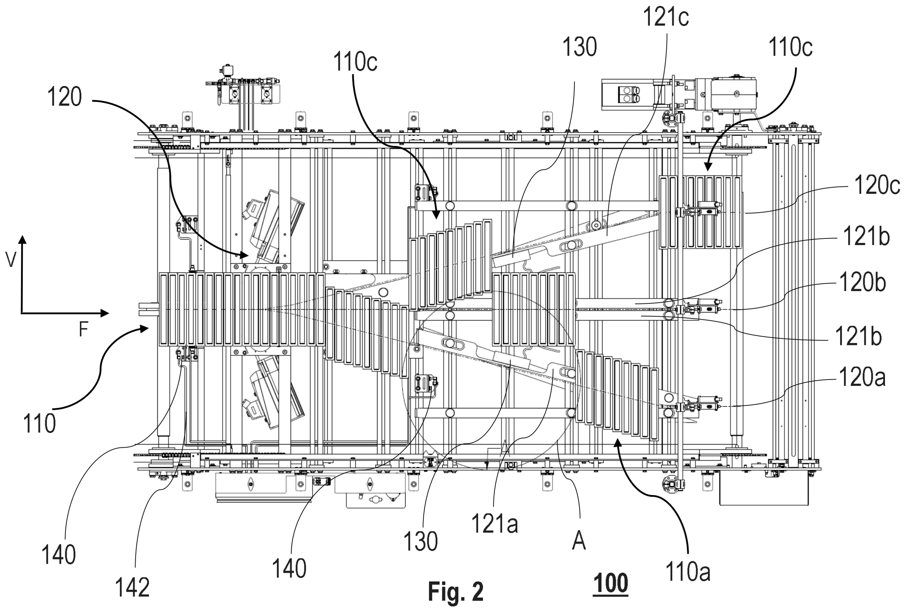

Fig. 1 und 2 zeigen eine Ausführungsform eines erfindungsgemäßen Verteil- und/oder Zusammenführungsförderers 100, wobei einzelne Warenträger 110 zu Transportgruppen von jeweils 9 Warenträgern 110 zusammengefasst sind. Die Warenträger 110 bzw. Transportgruppen werden während ihrer Bewegung in Förderrichtung F auf unterschiedliche Führungsbahnen 120a, 120b und 120c verteilt.

Entsprechend werden die in einem einzigen Wareneingangsstrom ankommenden Warenträger 100 entlang der Führungsbahnen 120a, 120b und 120c in mehrere Warenteilströme unterteilt. Dabei werden die Warenträger 110a entlang der Führungsbahn 120a, die Warenträger 110b entlang der Führungsbahn 120b und die Warenträger 110c entlang der Führungsbahn 120c geführt. Die Umlenkung erfolgt an einer Umlenkeinrichtung 120.

Die Umlenkeinrichtung 120 kann beispielsweise wie in der DE 10 2022 100 904 A1 beschrieben ausgeführt sein und wird nicht im Detail beschrieben. Die Umlenkeinrichtung 120 ist jedoch allgemein dazu ausgebildet, die Warenträger 110 auf die unterschiedlichen Führungsbahnen 120a, 120b und 120c aufzuteilen.

In Fig. 1 ist repräsentativ an einem der Warenträger 110a ein Führungselement 111 mit einer Bezugsziffer versehen. Das Führungselement 111 dient dazu, mit einem Führungskörper 121a der Führungsbahn 120a in Kontakt zu kommen. So wird der Warenträger 110a abhängig von der Ausrichtung des Führungskörpers 121a verschoben. Insgesamt weist jede der Führungsbahnen 120a, 120b und 120c entsprechende Führungskörper 121a, 121b und 121c auf.

Die Warenträger 110a sind umlaufend angetrieben an dem Verteil- und/oder Zusammenführungsförderer 100 angeordnet. Zum Antrieb weist der Verteil- und/oder Zusammenführungsförderer 100 Gleitkörper 150 auf. Die Gleitkörper 150 sind insbesondere rundstabförmig ausgebildet.

Zur besseren Darstellbarkeit sind lediglich einige der Gleitkörper 150 gezeigt. Insbesondere sind in Fig. 1 an einem unteren Bereich des Verteil- und/oder Zusammenführungsförderers 100 mehrere Gleitkörper 150 nebeneinander dargestellt. Auf der Oberseite des Verteil- und/oder Zusammenführungsförderers 100 wurde auf die Darstellung aller Gleitkörper 150 bis auf den mit der Bezugsziffer 150 gezeigten Gleitkörper 150 verzichtet. An dem Beispiel des gezeigten Gleitkörpers 150 ist erkennbar, wie der Warenträger 110 an bzw. auf dem Gleitkörper 150 angeordnet ist.

Die Gleitkörper 150 erstrecken sich senkrecht zur Förderrichtung F in die in Fig. 2 eingezeichnete Verschieberichtung V. Die Gleitkörper 150 werden umlaufend von einer von einem Antrieb 160 angetriebenen Kette 161 angetrieben.

Hierbei ist jeweils einem Warenträger 110 ein Gleitkörper 150 zugeordnet. Die Warenträger 110 sind in Verschieberichtung V entlang der Gleitkörper 150 verschiebbar. Wie oben beschrieben wird die Verschiebung durch den Kontakt der Führungselemente 111 der Warenträger 110 mit den Führungskörpern 121a, 121b und 121c bewirkt.

Da die Warenträger 110 auf bzw. an den Gleitkörpern 150 gleiten, müssen die Gleitkörper 150 für einen möglichst reibungsarmen Betrieb geschmiert werden. Hierzu weist der Verteil- und/oder Zusammenführungsförderer 100 mehrere Schmierungseinrichtungen 140 auf. Wie beispielsweise in Fig. 1 und Fig. 2 zu erkennen, sind vor der Umlenkeinrichtung 120 zwei Schmierungseinrichtungen 140 angeordnet. Außerdem sind hinter der Umlenkeinrichtung 120 zwei weitere Schmierungseinrichtungen 140 angeordnet. Die Schmierungseinrichtungen 140 sind mit Schmiermittelleitungen 142 verbunden, die dazu ausgebildet sind, die Schmierungseinrichtung 140 mit Schmiermittel, beispielsweise Öl, zu versorgen. Die Schmierungseinrichtung 140 selbst kann beispielsweise wie in Fig. 1 angedeutet einen Schmierpinsel 141 aufweisen, mittels dessen das Schmiermittel beispielsweise auf die Gleitkörper 150 auftragbar ist.

Um nicht unnötig permanent Schmiermittel auf die Gleitkörper 150 auftragen zu müssen, weist der Verteil- und/oder Zusammenführungsförderer 100 mehrere Betriebszustandserfassungseinrichtungen 130 auf. Diese sind beispielsweise in Fig. 2 gekennzeichnet.

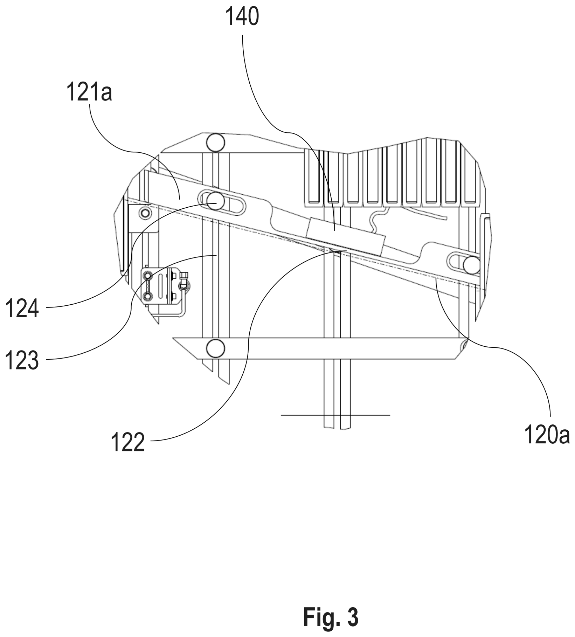

Fig. 3 zeigt einen vergrößerten Bereich aus Fig. 2, der mit dem Buchstaben A gekennzeichnet ist und die Betriebszustandserfassungseinrichtung 130 deutlicher zeigt.

Die Betriebszustandserfassungseinrichtung 130 ist dazu ausgebildet, einen sich abhängig von einer Widerstandskraft, insbesondere einem Reibungswiderstand, beim Verschieben der Warenträge 110 entlang der Gleitkörper 150 ändernden Messwert zu erfassen.

Wird ein Warenträger 110 entlang der in Fig. 3 gezeigten Führungsbahn 120a bewegt, verschiebt sich der entsprechende Warenträger 110a auch entlang des Gleitkörpers 150. Entsprechend wirkt hierbei eine Kraft in Förderrichtung F und eine Kraft in Verstellrichtung V gegen den Führungskörper 121a. Ist der Reibungswiderstand zwischen dem Gleitkörper 150 und dem Warenträger 110 hoch, wirkt eine hohe Kraft in Verschieberichtung V gegen den Führungskörper 121a. Bei einem niedrigen Reibungswiderstand zwischen dem Gleitkörper 150 und dem Warenträger 110 wirkt hingegen eine niedrige Kraft in Verschieberichtung V auf den Führungskörper 121a.

Entsprechend lässt sich durch eine Kraftmessung am Führungskörper 121a ein von der Widerstandskraft, insbesondere dem Reibungswiderstand, der Warenträger 110 abhängigen Messwert erfassen.

Hierzu ist die Betriebszustandserfassungseinrichtung 130 als Kraftsensor, insbesondere als Dehnmessstreifen, ausgebildet. Der Dehnmessstreifen erfasst eine auf den Führungskörper 121a wirkende resultierende Kraft, insbesondere in Richtung der Haupterstreckungsrichtung des Führungskörpers 121a. Die Betriebszustandserfassungseinrichtung 130 bzw. der Dehnmessstreifen ist hierbei direkt an dem Führungskörper 121a befestigt.

Der Führungskörper 121a ist aus Kunststoff ausgebildet und hierdurch elastisch dehnbar, sodass eine elastische Dehnung mittels des Dehnmessstreifens erfassbar ist. Wie insbesondere in Fig. 3 zu erkennen, ist die Betriebszustandserfassungseinrichtung 130 an einem verjüngten Bereich 122 des Führungskörpers 121a angeordnet. Dabei erfolgt das Messen an dem verjüngten Bereich 122, wodurch eine höhere Messsensibilität erreicht werden kann. Bei der verbleibenden Materialstärke kann es sich um eine Breite von 5 mm bis 10 mm handeln.

Auch wenn die Betriebszustandserfassungseinrichtung 130 hier insbesondere mit Bezug auf den Führungskörper 121a beschrieben worden ist, können auch an den Führungskörpern 121b und 121b entsprechende Betriebszustandserfassungs-einrichtungen 130 angeordnet sein. Die beschriebenen Aspekte sind somit auf die anderen Führungskörper 121b und 121c übertragbar.

Die Führungskörper 121a, 121b und 121c sind, wie in Fig. 3 zu erkennen, entlang einer Verstellführung 123 mittels Führungsteilen 124 verschiebbar. So können die Führungsbahnen 121a, 121b und 121c entsprechend in ihrer Ausrichtung, insbesondere ihrer Neigung verändert werden.

Durch das Erfassen des Messwerts mittels der Betriebszustandserfassungseinrichtung 130 kann eine bedarfsgerechte Schmierung des Verteil- und/oder Zusammenführungsförderers 100 und insbesondere der Gleitkörper 150 erfolgen. Hierzu kann eine nicht dargestellte Steuereinrichtung angeordnet sein, mittels derer die Schmierungseinrichtung 140 in Abhängigkeit von dem mittels der Betriebszustandserfassungseinrichtung 130 erfassten Messwert steuerbar ist.

Neben der Erkennung von Schmierbedarf kann der mittels der Betriebszustandserfassungseinrichtung 130 erfasste Messwert auch einen Hinweis auf Verschleiß oder Störungen wie beispielsweise Hindernisse beim Verteil- und/oder Zusammenführungsförderer 100 hinweisen. Wird beispielsweise mittels der Betriebszustandserfassungseinrichtung 130 ein erhöhter Messwert gemessen, der sich nicht durch Schmierung des Verteil- und/oder Zusammenführungsförderers 100 beheben lässt, kann auf eine Verschmutzung oder ein Hindernis geschlossen werden.

Es versteht sich, dass bei der vorliegenden Erfindung ein Zusammenhang zwischen einerseits Merkmalen besteht, die im Zusammenhang mit Verfahrensschritten beschrieben wurden, sowie andererseits Merkmalen, die im Zusammenhang mit entsprechenden Vorrichtungen beschrieben wurden. Somit sind beschriebene Verfahrensmerkmale auch als zur Erfindung gehörige Vorrichtungsmerkmale - und umgekehrt - anzusehen, selbst wenn dies nicht explizit erwähnt wurde.

Es ist festzuhalten, dass die unter Bezug auf einzelne Ausführungsformen bzw. -varianten beschriebenen Merkmale der Erfindung, wie beispielsweise Art und Ausgestaltung der einzelnen Komponenten sowie deren genaue Dimensionierung und räumliche Anordnung auch bei anderen Ausführungsformen vorhanden sein können, außer wenn es anders angegeben ist oder sich aus technischen Gründen von selbst verbietet. Von derartigen, in Kombination beschriebenen Merkmalen einzelner Ausführungsformen müssen außerdem nicht notwendigerweise alle Merkmale in einer betreffenden Ausführungsform realisiert sein.

### Bezugszeichen

- 100: Verteil- und/oder Zusammenführungsförderer
- 110: Warenträger
- 110a: Warenträger
- 110b: Warenträger
- 110c: Warenträger
- 111: Führungselement
- 120: Umlenkeinrichtung
- 120a: Führungsbahn
- 120b: Führungsbahn
- 120c: Führungsbahn
- 121a: Führungskörper
- 121b: Führungskörper
- 121c: Führungskörper
- 122: Verjüngter Bereich
- 123: Verstellführung
- 124: Führungsteil
- 130: Betriebszustandserfassungseinrichtung
- 140: Schmierungseinrichtung
- 141: Schmierpinsel
- 142: Schmiermittelleitung
- 150: Gleitkörper
- 160: Antrieb
- 161: Kette
- F: Förderrichtung
- V: Verschieberichtung

## Patentansprüche

1. Verteil- und/oder Zusammenführungsförderer (100) zum Verteilen und/oder Zusammenführen von Waren, insbesondere von in Gebinden gruppierten Behältern, wobei der Verteil- und/oder Zusammenführungsförderer (100) Folgendes aufweist:
eine Vielzahl umlaufend angetriebener Warenträger (110), die entlang zumindest zweier Führungsbahnen (120a, 120b, 120c) in Förderrichtung (F) bewegbar sind,
eine Umlenkeinrichtung (120) zum Aufteilen und/oder Zusammenführen der Warenträger (110) auf die Führungsbahnen (120a, 120b, 120c),
eine Vielzahl den Warenträgern (110) zugeordneten Gleitkörper (150), entlang derer die Warenträger (110) in einer Verschieberichtung (V) senkrecht zur Förderrichtung (F) verschiebbar sind,
wobei die Warenträger (110) zumindest teilweise mittels eines Führungselements (111) entlang der Führungsbahnen (120a, 120b, 120c) geführt sind, wobei die Führungselemente (111) dazu ausgebildet sind, die Warenträger (110) durch Kontakt mit einem Führungskörper (121a, 121b, 121c) der Führungsbahn (120a, 120b, 120c) abhängig von einer Ausrichtung des Führungskörpers (121a, 121b, 121c) zu verschieben,
**dadurch gekennzeichnet, dass**
der Verteil- und/oder Zusammenführungsförderer (100) an zumindest einer der Führungsbahnen (120a, 120b, 120c) eine Betriebszustandserfassungseinrichtung (130) aufweist, die dazu ausgebildet ist, einen sich abhängig von einer Widerstandskraft ändernden Messwert zu erfassen, wobei die Widerstandskraft beim Verschieben der Warenträger (110) entlang der jeweiligen Gleitkörper (150) gegen die Verschiebebewegung der Warenträger (110) wirkt.

2. Verteil- und/oder Zusammenführungsförderer (100) nach Anspruch 1, **dadurch gekennzeichnet, dass** die Betriebszustandserfassungseinrichtung (130) einen Kraftsensor, insbesondere einen Dehnmessstreifen, aufweist.

3. Verteil- und/oder Zusammenführungsförderer (100) nach Anspruch 1 oder 2, **dadurch gekennzeichnet, dass** die Betriebszustandserfassungseinrichtung (130) dazu ausgebildet ist, eine auf einen der Führungskörper (121a, 121b, 121c) wirkende Kraft, insbesondere in Richtung der Haupterstreckungsrichtung des jeweiligen Führungskörpers (121a, 121b, 121c), zu erfassen.

4. Verteil- und/oder Zusammenführungsförderer (100) nach einem der vorherigen Ansprüche, **dadurch gekennzeichnet, dass** die Führungskörper (121a, 121b, 121c) zumindest im Wesentlichen stabförmig ausgebildet sind.

5. Verteil- und/oder Zusammenführungsförderer (100) nach einem der vorherigen Ansprüche, **dadurch gekennzeichnet, dass** die Betriebszustandserfassungseinrichtung (130) an dem Führungskörper (121a, 121b, 121c) der jeweiligen Führungsbahn (120a, 120b, 120c) angeordnet, insbesondere befestigt, ist.

6. Verteil- und/oder Zusammenführungsförderer (100) nach einem der vorherigen Ansprüche, **dadurch gekennzeichnet, dass** der Führungskörper (121a, 121b, 121c) zumindest bereichsweise, vorzugsweise vollständig, aus einem elastisch dehnbaren Material, insbesondere aus Kunststoff, ausgebildet ist.

7. Verteil- und/oder Zusammenführungsförderer (100) nach einem der vorherigen Ansprüche, **dadurch gekennzeichnet, dass** der Führungskörper (121a, 121b, 121c) einen verjüngten Bereich (122) mit einer reduzierten Materialstärke aufweist, wobei die Betriebszustandserfassungseinrichtung (130) zum Messen an dem verjüngten Bereich (122) angeordnet ist.

8. Verteil- und/oder Zusammenführungsförderer (100) nach Anspruch 7, **dadurch gekennzeichnet, dass** der verjüngte Bereich eine Materialstärke zwischen 3 mm und 15 mm aufweist.

9. Verteil- und/oder Zusammenführungsförderer (100) nach einem der vorherigen Ansprüche, **dadurch gekennzeichnet, dass** der Verteil- und/oder Zusammenführungsförderer (100) eine Schmierungseinrichtung (140), insbesondere zum Schmieren der Gleitkörper (150), aufweist, die in Abhängigkeit von dem mittels der Betriebszustandserfassungseinrichtung (130) erfassten Messwert steuerbar oder gesteuert ist.

10. Verteil- und/oder Zusammenführungsförderer (100) nach Anspruch 9, **dadurch gekennzeichnet, dass** die Schmierungseinrichtung (140) Schmierpinsel (141) zum Auftragen eines Schmiermittels auf die Gleitkörper (130) aufweist.

11. Verteil- und/oder Zusammenführungsförderer (100) nach einem der vorherigen Ansprüche, **dadurch gekennzeichnet, dass** die Gleitkörper (150) stabförmig, insbesondere rundstabförmig, ausgebildet sind.

12. Verteil- und/oder Zusammenführungsförderer (100) nach einem der vorherigen Ansprüche, **dadurch gekennzeichnet, dass** die Gleitkörper (150) aus Metall und/oder die Warenträger (110) zumindest bereichsweise, insbesondere in einem Kontaktbereich mit den Gleitkörpern (130), aus Kunststoff ausgebildet sind.

13. Behälterbehandlungsanlage mit zumindest einer Behälterbehandlungsmaschine, insbesondere einer Gebindebildevorrichtung zum Gruppieren von Behältern zu Gebinden, und einem Verteil- und/oder Zusammenführungsförderer (100) nach einem der vorherigen Ansprüche zum Verteilen und/oder Zusammenführen der in Gebinde gruppierten Behälter.

14. Verfahren zum Schmieren eines Verteil- und/oder Zusammenführungsförderers, insbesondere eines Verteil- und/oder Zusammenführungsförderers (100) nach einem der Ansprüche 1 bis 12, **dadurch gekennzeichnet, dass** das Verfahren folgende Schritte aufweist:
Anordnen von Waren, insbesondere in Gebinde gruppierten Behältern, auf einer Vielzahl von Warenträgern (110);
Aufteilen oder Zusammenführen der Waren entlang mehrerer Führungsbahnen durch Verschieben der Warenträger (110);
Erfassen eines Messwerts, der von einer Widerstandskraft abhängt, die beim Verschieben der Warenträger (110) gegen die Verschiebebewegung der Warenträger (110) wirkt; und
Schmieren des Verteil- und/oder Zusammenführungsförderers (100) abhängig von dem erfassten Messwert.
